# EUROPEAN PATENT APPLICATION

(11) **EP 2 768 217 A1**
(43) Date of publication of application: **20.08.2014**
(21) Application number: 13194801.0
(22) Date of filing: 28.11.2013
(51) Int. Cl.: H04N 5/50, H04N 21/482

(54) **Display apparatus, server and control method thereof**

(30) Priority: 13.02.2013 KR 20130015488
(71) Applicant: Samsung Electronics Co., Ltd, Gyeonggi-do 443-742 (KR)
(72) Inventor: Lee, Sang-kwon, Gyeonggi-do (KR); Lee, Young-hwan, Seoul (KR); Jeong, Seok-hyun, Seoul (KR); Han, Se-jun, Gyeonggi-do (KR)
(74) Representative: Jones, Ithel Rhys

(57) **Abstract**

Exemplary embodiments disclose a display apparatus, a server, and a control method thereof. The display apparatus includes: a signal processor configured to process a broadcasting signal of a predetermined channel; a displayer configured to display an image based on the processed broadcasting signal; a communication section configured to communicate with a server; and a controller configured to receive a list of unified channels of a plurality of broadcasting areas from the server, determine whether the unified channels correspond to receivable channels in a current broadcasting area, and provide program information of a plurality of channels corresponding to the receivable channels, among the unified channels.

## Description

### BACKGROUND

### Field

Apparatuses and methods consistent with the exemplary embodiments relate to a display apparatus, a server and a control method thereof. More particularly, exemplary embodiments relate to a display apparatus which receives a broadcasting signal of a predetermined channel, the broadcasting signal broadcasted in accordance with broadcasting areas and displays an image, a server which provides information about the predetermined channel, and a control method thereof.

### Description of the Related Art

A television (TV) display apparatus receives a broadcasting signal and displays an image. The display apparatus receives the broadcasting signal of one channel, which is selected by a user among a plurality of channels. The display apparatus may receive information about a program of a channel, e.g., an electronic program guide (hereinafter, referred to as "program information") from a server connected through a network such as Internet, and provide it to a user.

Meanwhile, the broadcasting signal may be broadcasted in accordance with a certain area, such as a nation or country (hereinafter, referred to as a "broadcasting area"). The display apparatus may receive a broadcasting signal broadcasted within the broadcasting area in which the display apparatus is located. The program information may also be managed by a server, in accordance with the broadcasting area. The display apparatus may receive and provide the program information of the setup broadcasting area from the server.

In accordance with receiving locations, receiving sensitivity, etc., the display apparatus may not properly receive broadcasting signals of some channels of a relevant broadcasting area, or may further receive broadcasting signals of some channel of another adjacent broadcasting area. However, the program information of the relevant broadcasting area may contain information about a channel of which a broadcasting signal is not properly received, or may not contain information about a channel of which a broadcasting signal is additionally receivable. Therefore, a user may experience inconvenient or become confused.

### SUMMARY

One or more exemplary embodiments may provide a display apparatus, a server and a control method thereof, in which program information of a receivable channel is provided, regardless of a receiving location, receiving sensitivity, etc. Therefore, user convenience is improved.

According to an aspect of an exemplary embodiment, a display apparatus may include a signal processor configured to process a broadcasting signal of a predetermined channel; a displayer configured to display an image based on the processed broadcasting signal; a communication section configured to communicate with a server; and a controller configured to receive a list of unified channels of a plurality of broadcasting areas from the server, determine whether the unified channels correspond to receivable channels in a current broadcasting area, and provide program information of a plurality of channels corresponding to the receivable channels, among the unified channels.

The controller may use digital video broadcasting (DVB) triplet information to determine whether the unified channels correspond to the receivable channels.

The controller may use a major number, a minor number, and physical transmission channel (PTC) information in advanced television systems committee (ATSC) standard to determine whether the unified channels correspond to the receivable channels.

The controller may receive the program information of the channels corresponding to the receivable channels, among the unified channels, from the server, and provide the received program information.

According to another aspect of an exemplary embodiment, a control method of a display apparatus displaying an image based on a broadcasting signal of a predetermined channel, may include: receiving a list of unified channels of a plurality of broadcasting areas from a server; determining whether the unified channels correspond to receivable channels in a current broadcasting area; and providing program information of a plurality of channels corresponding to the receivable channels, among the unified channels.

The determining may include using digital video broadcasting (DVB) triplet information to determine whether the unified channels correspond to the receivable channels.

The determining may include using a major number, a minor number, and physical transmission channel (PTC) information in advanced television systems committee (ATSC) standard to determine whether the unified channels correspond to the receivable channels.

The providing may include receiving the program information of the channels corresponding to the receivable channels, among the unified channels, from the server, and providing the received program information.

According to another aspect of an exemplary embodiment, a server may include: a communication section configured to communicate with a display apparatus; a storage section configured to store information about a channel of a broadcasting signal; and a controller configured to create a list of unified channels of a plurality of broadcasting areas, and transmit the created list of unified channels to the display apparatus.

The controller may create the list of the unified channels as a union of a plurality of channels broadcasted in the plurality of broadcasting areas.

The list of the unified channels may include digital video broadcasting (DVB) triplet information.

The list of the unified channels may include a major number, a minor number, and physical transmission channel (PTC) information in advanced television systems committee (ATSC) standard.

The controller may transmit program information of a plurality of channels, which correspond to receivable channels in a current broadcasting area of the display apparatus, among the unified channels, to the display apparatus.

According to another aspect of an exemplary embodiment, a control method of a server providing information about a plurality of channels of a plurality of broadcasting signals, may include: creating a list of unified channels of a plurality of broadcasting areas; and transmitting the created list of the unified channels to a display apparatus.

The creating may include creating the list of the unified channels as a union of the plurality of channels broadcasted in the plurality of broadcasting areas.

The list of the unified channels may include digital video broadcasting (DVB) triplet information.

The list of the unified channels may include a major number, a minor number, and physical transmission channel (PTC) information in advanced television systems committee (ATSC) standard.

The method may further include transmitting program information of the plurality of channels, which correspond to receivable channels in a current broadcasting area of the display apparatus, among the unified channels, to the display apparatus.

According to another aspect of an exemplary embodiment, a display apparatus may include: a signal processor configured to process a broadcasting signal of a predetermined channel; a displayer configured to display an image based on the processed broadcasting signal; a communication section configured to communicate with a server that manages a list of unified channels of a plurality of broadcasting areas; and a controller configured to transmit information of receivable channels in a current broadcasting area to the server, receive program information of a plurality of channels corresponding to the receivable channels, among the unified channels, from the server, and provide the received program information.

According to another aspect of an exemplary embodiment, a control method of a display apparatus displaying an image based on a broadcasting signal of a predetermined channel, may include: transmitting information of receivable channels in a current broadcasting area; receiving program information of a plurality of channels corresponding to the receivable channels, among the unified channels of a plurality of broadcasting areas from the server; and providing the received program information.

According to another aspect of an exemplary embodiment, a server may include: a communication section configured to communicate with a display apparatus; a storage section configured to store information about a plurality of channels of broadcasting signals; and a controller configured to create a list of unified channels of a plurality of broadcasting areas, receive information about receivable channels in a current broadcasting area of the display apparatus, from the display apparatus, and transmit program information of the channels corresponding to the receivable channels, among the unified channels, to the display apparatus.

According to an aspect of an exemplary embodiment, a control method of a server providing information about a plurality of channels of a plurality of broadcasting signals, may include: creating a list of unified channels of a plurality of broadcasting areas; receiving information of receivable channels in a current broadcasting area of a display apparatus, from the display apparatus; and transmitting program information of the channels corresponding to the receivable channels, among the unified channels, to the display apparatus.

According to an aspect of an exemplary embodiment, a server may include a communicator configured to communicate with a display apparatus; and a controller configured to create a list of unified channels of a plurality of broadcasting areas, and transmit the created list of the unified channels to the display apparatus.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates a display apparatus and a server according to an exemplary embodiment;
FIG. 2 illustrates a configuration of the display apparatus according to an exemplary embodiment;
FIG. 3 is a flowchart showing operations of the display apparatus according to an exemplary embodiment;
FIG. 4 illustrates a configuration of the server according to an exemplary embodiment;
FIG. 5 is a flowchart showing operations of the server according to an exemplary embodiment;
FIGs. 6 and 7 show examples of receiving broadcasting signals in accordance with broadcasting areas and locations according to an exemplary embodiment;
FIG. 8 shows information about a channel broadcasted in a broadcasting area A according to an exemplary embodiment;
FIG. 9 shows information about a channel broadcasted in a broadcasting area B according to an exemplary embodiment;
FIG. 10 shows a list of unified channels in the broadcasting area A and the broadcasting area B according to an exemplary embodiment;
FIG. 11 shows an example of determining whether the unified channels correspond to receivable channels according to an exemplary embodiment;
FIG. 12 illustrates a display apparatus and a server according to another exemplary embodiment;
FIG. 13 is a flowchart showing operations of the display apparatus according to another exemplary embodiment; and
FIG. 14 is a flowchart showing operations of the server according to another exemplary embodiment.

### DETAILED DESCRIPTION OF EXEMPLARY EMBODIMENTS

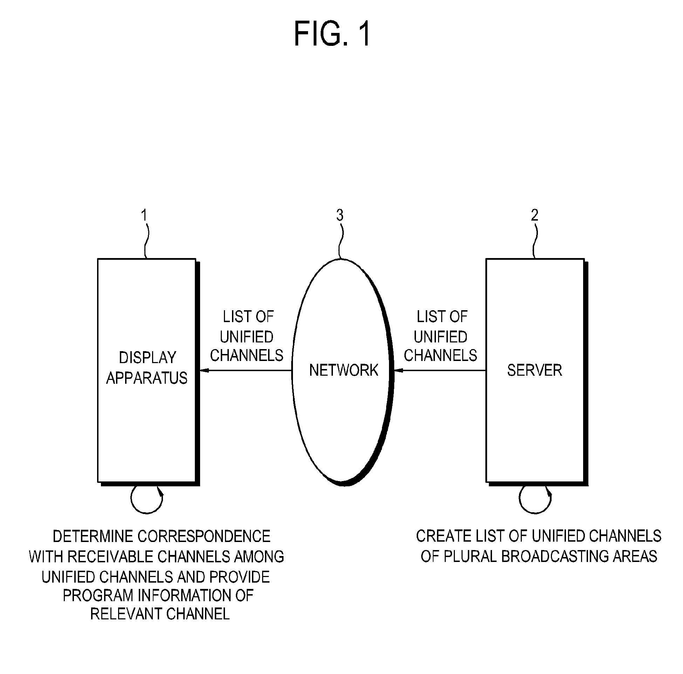

Exemplary embodiments will now be described in detail. FIG. 1 illustrates a display apparatus and a server according to an exemplary embodiment. The display apparatus 1 is connected to a server 2 through a network 3, such as Internet. The display apparatus 1 may be an apparatus such as a television (TV), a smart phone, a smart pad, a personal computer (PC), etc., which can display an image based on a broadcasting signal. The server 2 creates a list of channels broadcasted in a plurality of broadcasting areas (hereinafter, referred to as "unified channels"). The display apparatus 1 receives a list of the unified channels from the server 2, determines whether the unified channels correspond to receivable channels, and provides a use with program information of channels corresponding to the receivable channels among the unified channels. The program information may include information such as a channel name, a channel number, a program name, a starting time, an ending time, etc. The display apparatus 1 may receive the program information of the broadcasting area, in which the display apparatus 1 is located, from the server 2. The display apparatus 1 may set up the broadcasting area in response to a user command. When the broadcasting area is set up, the display apparatus 1 may inform a user of a provider that provides a program viewable in the broadcasting area. The display apparatus 1 may select a certain provider in accordance with a user command. The display apparatus 1 may inform a user of the program information provided by the provider selected by a user, e.g., a list of channels, a broadcasting schedule, related additional information, etc. The list of channels is channel lineup information which contains information about what channels are provided by the provider of the program in accordance with the broadcasting areas. The broadcasting schedule contains information about programs broadcasted in accordance with channels/timeslots. The related additional information contains information related to a corresponding program, such as a synopsis of each program, casts, a poster image, etc.

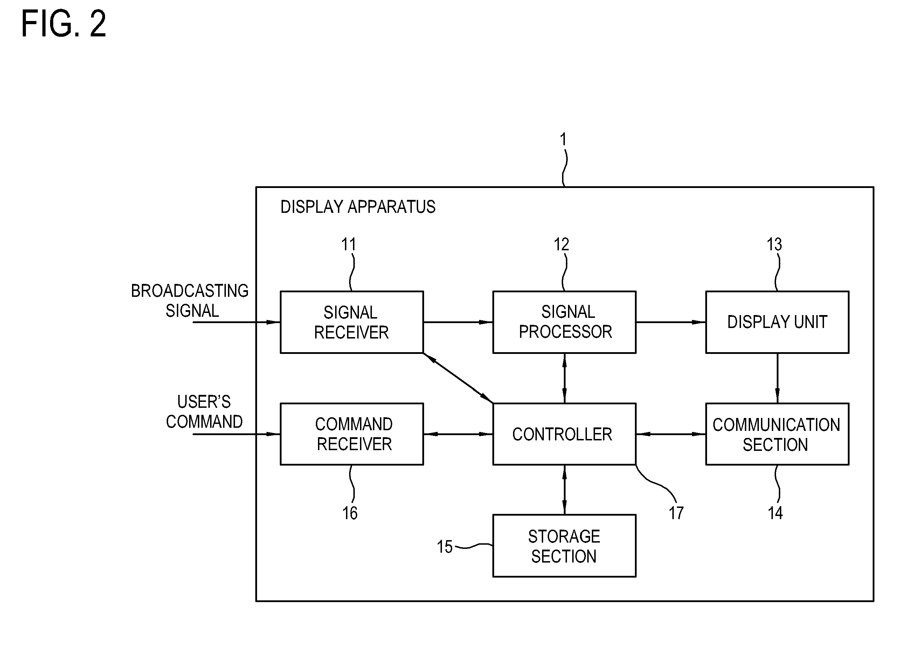

FIG. 2 illustrates a configuration of the display apparatus 1 according to an exemplary embodiment. The display apparatus 1 includes a signal receiver 11, a signal processor 12, a display unit 13, a communication section 14 and a controller 17. The signal receiver 11 receives a broadcasting signal. The broadcasting signal may be broadcasted by airwave broadcasting, cable broadcasting, satellite broadcasting, etc. The broadcasting signal has a plurality of channels. The signal receiver 11 received a broadcasting signal of one channel selected by a user, among a plurality of channels. The signal processor 12 processes the broadcasting signal received in the signal receiver 11 to be displayable as an image on the display unit 13. The display unit 13 displays an image based on the broadcasting signal processed by the signal processor 12. The communication section 14 communicates with the server 2. The communication section 14 receives a list of unified channels from the server 2 under control of the controller 17.

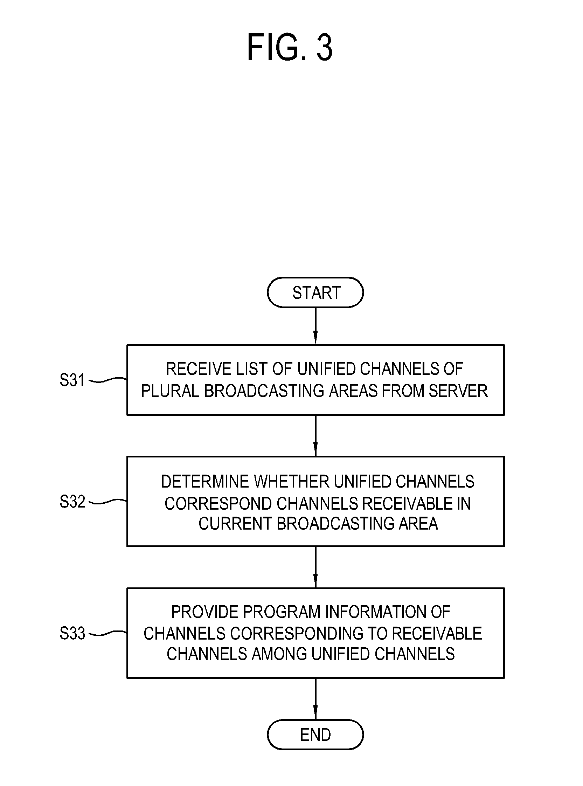

The controller 17 generally controls the display apparatus 1. The controller 17 may include a control program, a nonvolatile memory such as a flash memory, etc., to store the control program, a volatile memory such as a random access memory (RAM) for loading at least a portion of the control program, and a microprocessor for executing the loaded control program. FIG. 3 is a flowchart showing operations of the display apparatus according to an exemplary embodiment under control of the controller 17. First, at operation S31, the display apparatus 1 receives a list of the unified channels of the plurality of broadcasting areas from the server 2. Next, at operation S32, the display apparatus 1 determines whether the unified channels correspond to channels receivable in the current broadcasting area. At operation S33, the display apparatus 1 provides program information of channels corresponding to the receivable channels, among the unified channels.

Referring back to FIG. 2, the display apparatus 1 may further include a storage section 15 to store data or information needed for the operations of the display apparatus 1, and a command receiver 16 to receive a user command.

However, exemplary embodiments of FIG. 2 are not limited. For example, any of the signal receiver 11, the signal processor 12, the display unit 13, the communication section 14, the command receiver 16, and the controller 17 may include at least one processor, a circuit, or a hardware module.

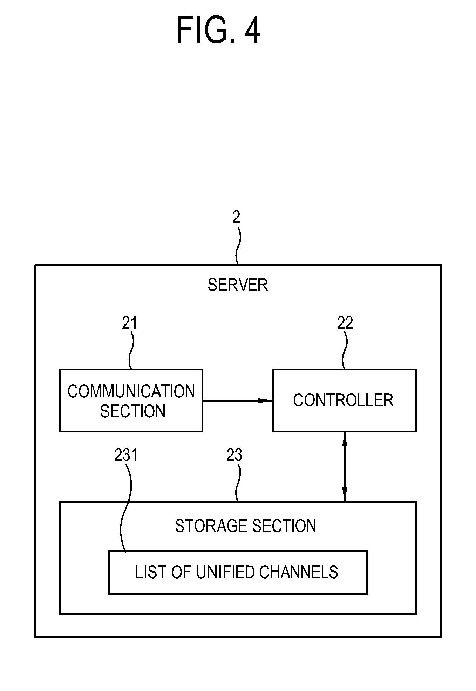

FIG. 4 illustrates a configuration of the server 2 according to an exemplary embodiment. The server 2 may include a communication section 21, a storage section 23, and a controller 22. The communication section 21 communicates with the display apparatus 1. The communication section 21 transmits a list of the unified channels 231 to the display apparatus 1 under control of the controller 22. The storage section 23 stores the list of the unified channels 231.

The controller 22 controls the server 2. The controller 22 may include a control program, a nonvolatile memory such as a flash memory, etc., to store the control program, a volatile memory such as a random access memory (RAM) for loading at least a portion of the control program, and a microprocessor for executing the loaded control program.

However, exemplary embodiments of FIG. 4 are not limited. For example, any of the communication section 21 and the controller 22 may include at least one processor, a circuit, or a hardware module.

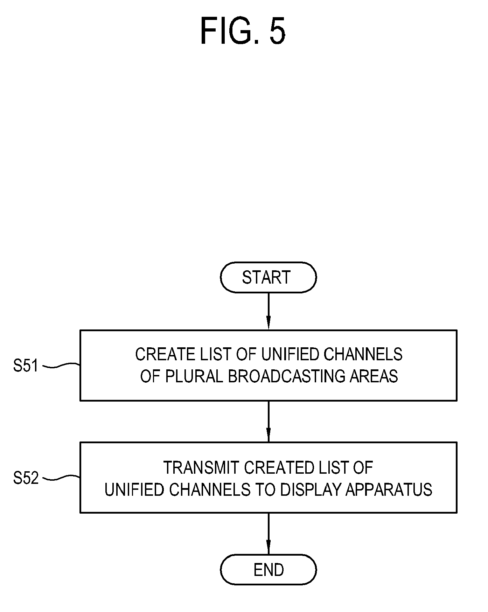

FIG. 5 is a flowchart showing operations of the server 2 according to an exemplary embodiment, under control of the controller 22. First, at operation S51, the server 2 creates a list of unified channels of the plurality of broadcasting areas. Next, at operation S52, the server 2 transmits the created list of unified channels to the display apparatus 1.

The server 2 may transmit the list of unified channels to the display apparatus 1 when there is a request from the display apparatus 1. The display apparatus 1 may request the server 2 to transmit the list of unified channels, periodically, or when a certain event occurs, or when there is a command from a user. The display apparatus 1 informs the server 2 of the setup broadcasting areas, and requests the list of unified channels matching with the broadcasting area. The server 2 may send the display apparatus 1 the list of unified channels, corresponding to the broadcasting area of the display apparatus 1, among the lists of unified channels corresponding to the many broadcasting areas.

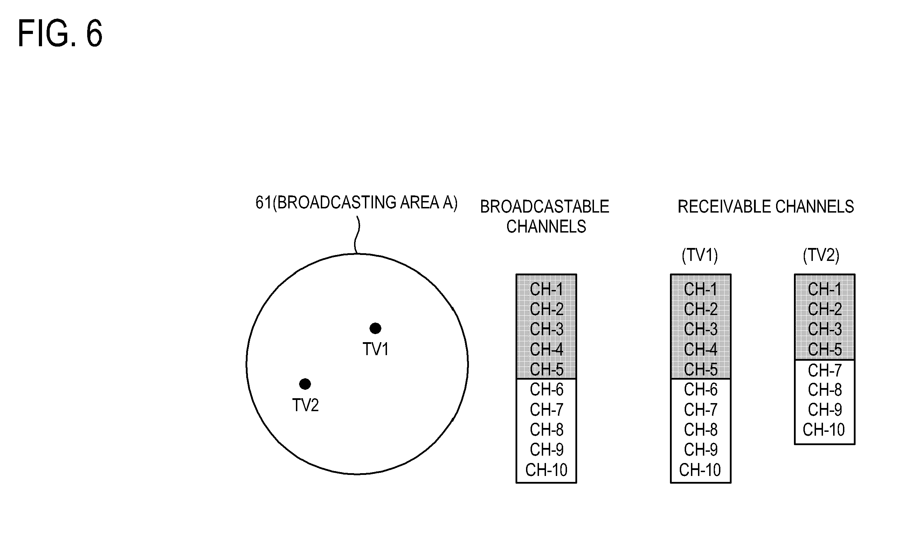

FIG. 6 shows an example of receiving the broadcasting signal in accordance with the broadcasting areas and locations. The reference numeral of 61 in FIG. 6 indicates a broadcasting area A. Within the broadcasting area A, the broadcasting signals of ten channels of CH-1 to CH-10 may be broadcasted. For example, five channels of CH-1 to CH-5 may be global broadcasting channels, but five channels of CH-6 to CH-10 may be local broadcasting channels. Within the broadcasting area A, sensitivity of receiving the broadcasting signal may vary depending on the location. For instance, a first display apparatus TV1 can receive the broadcasting signals of all the channels of CH-1 to CH-10. On the other hand, a second display apparatus TV2 can receive only the broadcasting signals of eight channels among ten channels, and cannot receive the broadcasting signals of channels of CH-4 and CH-6.

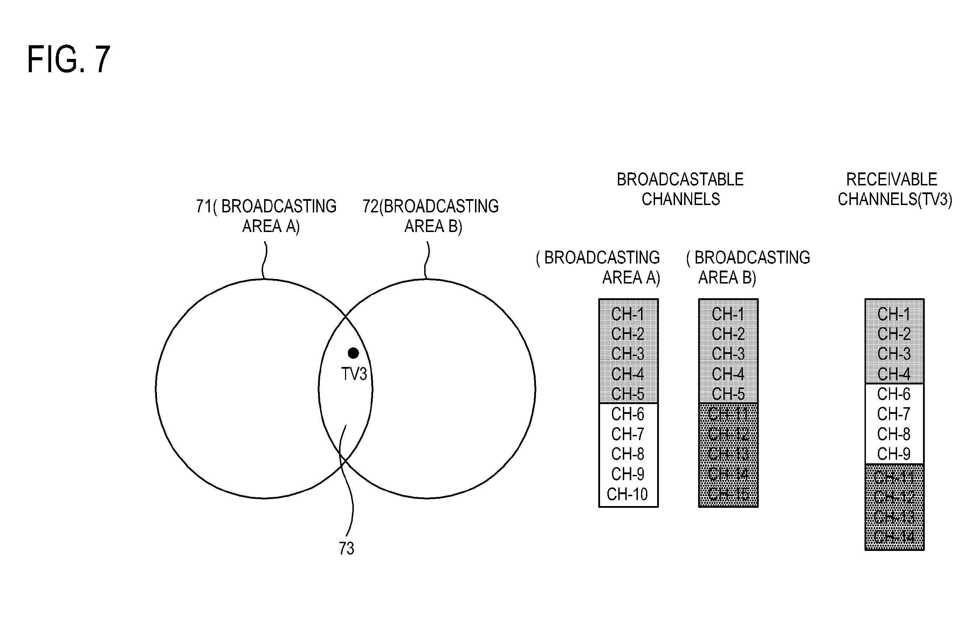

FIG. 7 shows another example of receiving the broadcasting signal in accordance with the broadcasting areas and locations. The reference numerals of 71 and 72 in FIG. 7 indicate two adjacent broadcasting areas A and B. Within the broadcasting area A 71, the broadcasting signals of ten channels of CH-1 to CH-10 may be broadcasted. Within the broadcasting area B 72, the broadcasting signals of channels of CH-1 to CH-5 and CH-11 to CH-15 may be broadcasted. Two broadcasting areas A and B (i.e., 71 and 72) may have an overlapping area 73. A third display apparatus TV3, located in the overlapping area 73 between the two broadcasting areas A and B (71 and 72), may receive both the broadcasting signal of the channel broadcasted in the broadcasting area A (71) and the broadcasting signal of the channel broadcasted in the broadcasting area B (72). For instance, the third display apparatus TV3 may receive broadcasting signals of channels of CH-1 to CH-4, CH-6 to CH-9, and CH-11 to CH-14.

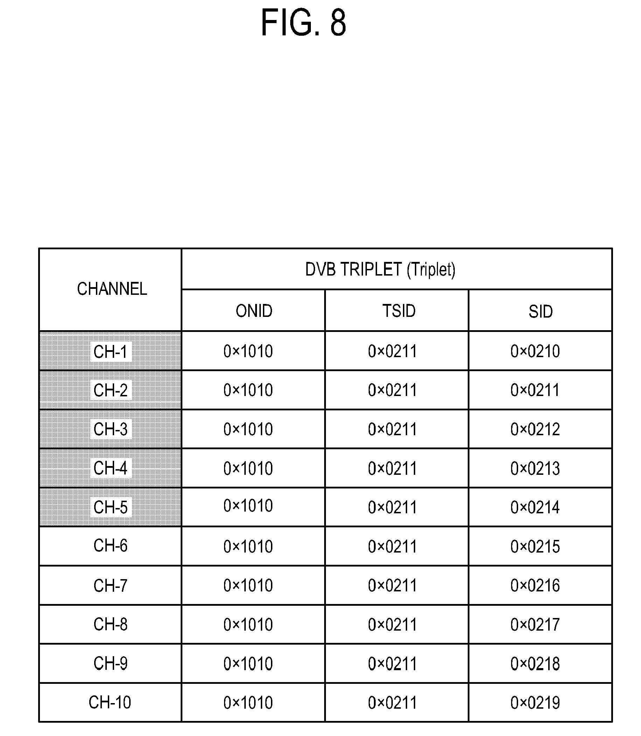

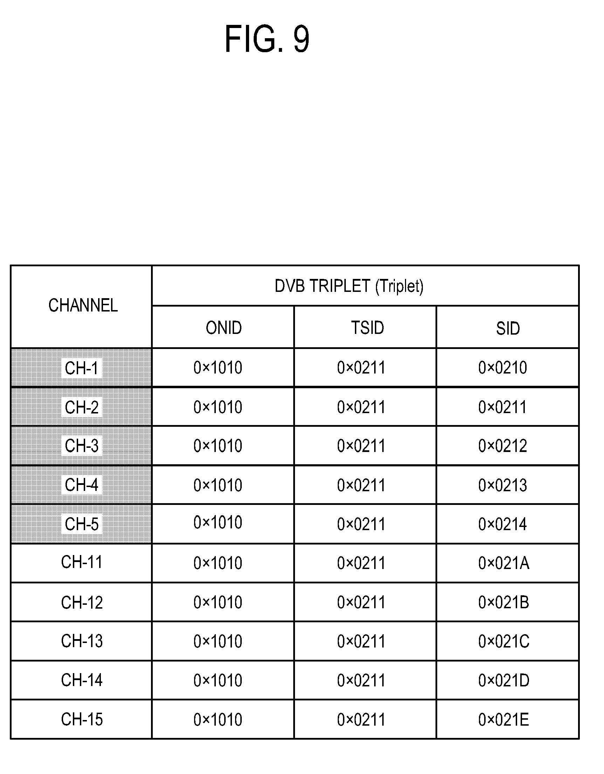

FIG. 8 shows information about a channel broadcasted in a broadcasting area A according to an exemplary embodiment. In this embodiment, the information about the channel contains digital video broadcasting (DVB) triplet information. As identification information of each channel, the DVB triplet information may include original network identification (ONID), transport stream ID (TSID), and service ID (SID). FIG. 8 shows the DVB triplet information of each channel from CH-1 to CH-10. FIG. 9 shows information about a channel broadcasted in a broadcasting area B. In particular, FIG. 9 shows DVB triplet information of the respective channels from CH-1 to CH-5 and the respective channel from CH-11 to CH-15.

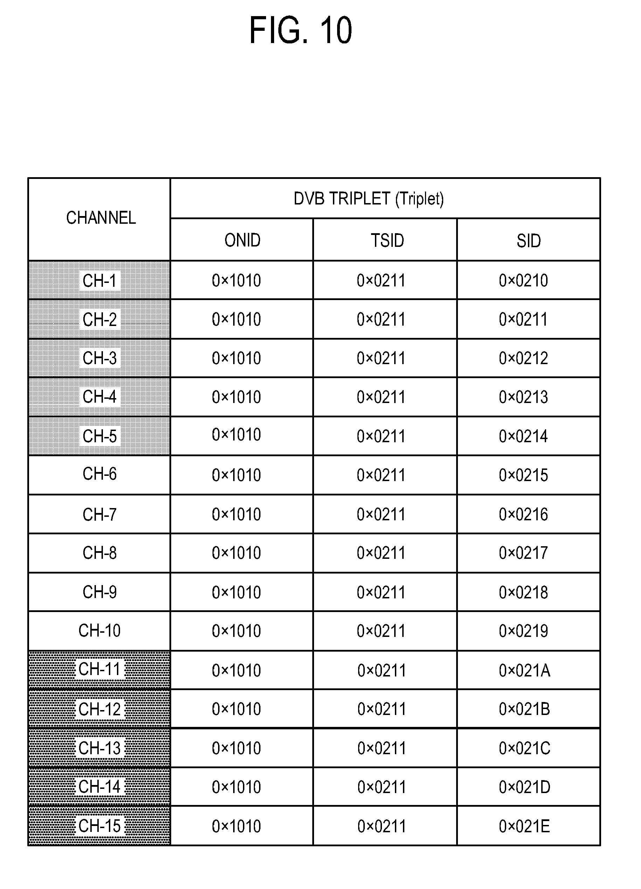

The server 2 may create a list of unified channels of both the broadcasting area A and the broadcasting area B. The list of unified channels may be a union of channels broadcasted in the broadcasting area A and channels broadcasted in the broadcasting area B. The server 2 may use the DVB triplet information of the broadcasting area A and the broadcasting area B, as shown in FIGs. 8 and 9, when generating the list of unified channels between the broadcasting area A and the broadcasting area B. FIG. 10 shows the list of unified channels between the broadcasting area A and the broadcasting area B, according to an exemplary embodiment. As shown therein, the list of unified channels between the broadcasting area A and the broadcasting area B may include lineup information of fifteen channels of CH-1 to CH-15, and the DVB triplet information corresponding to the respective channels. The server 2 may receive the DVB triplet information of each channel in the form of metadata from a separate server (not shown). The metadata is data related to the program information, such as an electronic program guide (EPG), and contains the DVB triplet information of each channel. The server 2 may periodically receive the metadata. The server 2 may receive the metadata in accordance with the broadcasting areas. The server 2 may process the received metadata to be adaptive to the display apparatus 1.

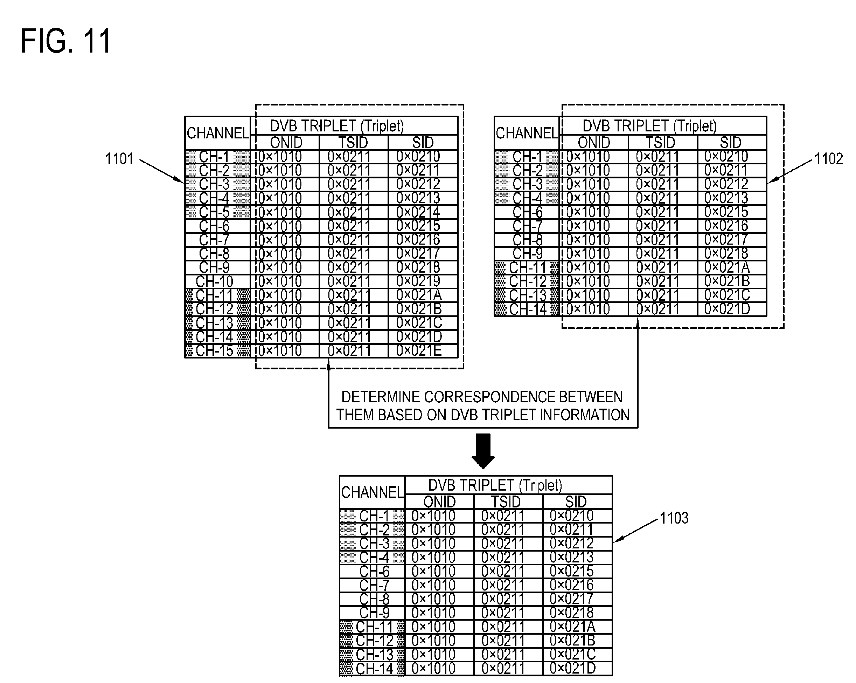

The server 2 transmits the created list of unified channels to the display apparatus 1 in the broadcasting area A or the broadcasting area B. The list of unified channels contains the DVB triplet information of each channel. The display apparatus 1 uses the list of unified channels, received from the server 2. Thus, the display apparatus 1 determines whether the unified channels correspond to receivable channels. FIG. 11 illustrates an example of determining whether the unified channels correspond to the receivable channels. In FIG. 11, the reference numeral of 1101 indicates the list of unified channels, and the reference numeral of 1102 indicates the list of receivable channels. While the list of unified channels 1101 contains fifteen channels of CH-1 to CH-15, the list 1102 of receivable channels contains channels CH-1 to CH-4, CH-6 to CH-9, and CH-11 to CH-14. The list of receivable channels 1102 is a channel map, which is configured from the broadcasting signals received by the display apparatus 1, using the signal receiver 11. The list of receivable channels 1102 includes the DVB triplet information of each channel. The DVB triplet information of the list of receivable channels 1102 is embedded in the received broadcasting signal. The display apparatus 1 may check the DVB triplet information of the list of unified channels 1101 against the list of receivable channels 1102, and determine whether they correspond to each other. Here, the channel is expressed in common, like 'CH-1', for convenience, but the lineup information (e.g., a channel name, a channel number, etc.) of the channels may be varied, depending on the providers of the broadcasting in the case of the practical broadcasting signal. Accordingly, only the lineup information of the channel is insufficient to identify the channel or determine whether it corresponds to another channel. Therefore, the display apparatus 1 uses the identification information of each channel, i.e., the DVB triplet information to identify or specify the receivable channels. Referring to FIG. 11, the display apparatus 1 may create a new list containing only the receivable channels 1103, among the channels in the list of unified channels 1101. In other words, the new list containing only the receivable channels 1103 excludes the unreceivable channels CH-5 and CH-10 from the list of unified channels 1101.

The display apparatus 1 may give a user the program information based on the new list containing only the receivable channels 1103. The display apparatus 1 may receive the program information of the new list containing only the receivable channels 1103 from the server 2. Accordingly, a user can receive the program information corresponding to the receivable channels. Thus, the user does not have inconvenience or confusion.

The exemplary embodiments describe the DVB triplet information as an example of information used for determining the channel correspondence, but the exemplary embodiments are not limited. Alternatively, other information may be used. For instance, a major number, a minor number, and physical transmission channel (PTC) information in advanced television systems committee (ATSC) standard may be employed as the information to be used for determining the channel correspondence.

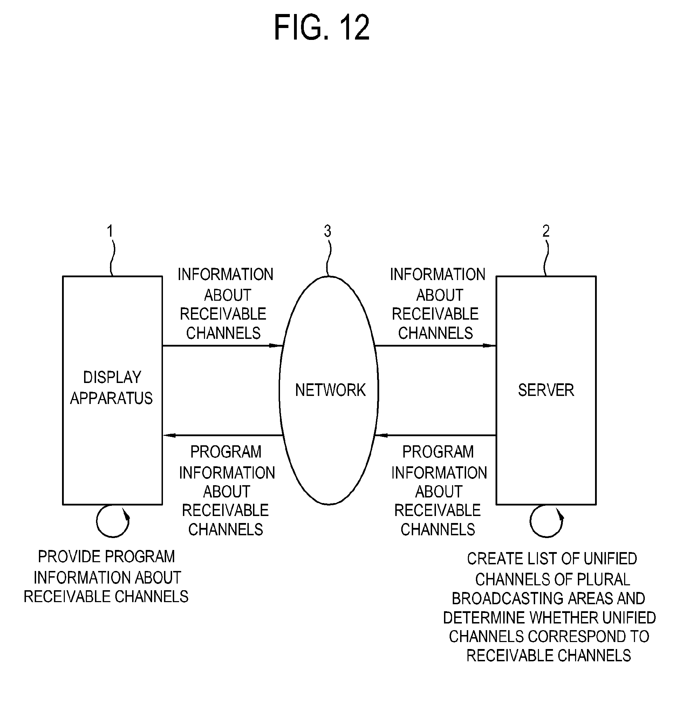

FIG. 12 illustrates a display apparatus and a server according to another exemplary embodiment. Regarding the display apparatus 1 and the server 2 shown in FIG. 12, descriptions about configurations equal to or similar to those of the display apparatus 1 and the server 2 described with reference to FIGs. 1 to 11 will be omitted. The display apparatus 1 is connected to the server 2 through a network 3, such as Internet. The display apparatus 1 transmits information about the receivable channels to the server 2. The server 2 creates a list of unified channels of the plurality of broadcasting areas, and determines whether the unified channels correspond to the receivable channels. The server 2 transmits the program information of the receivable channels to the display apparatus 1. The display apparatus 1 provides the program information of the receivable channels.

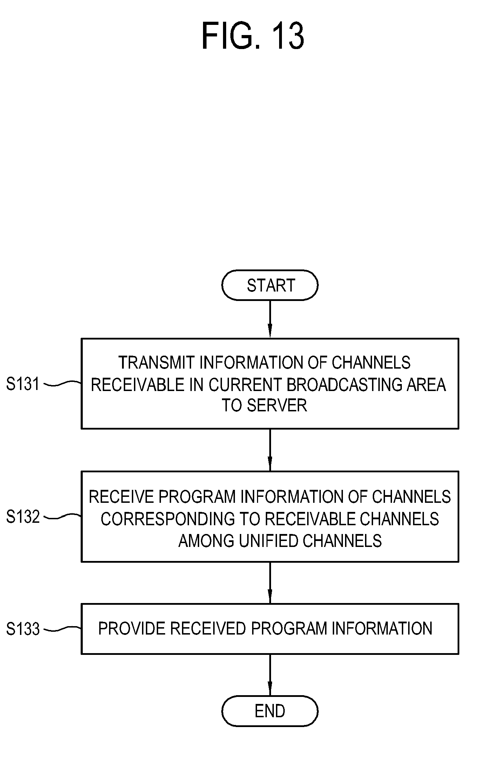

FIG. 13 is a flowchart showing operations of the display apparatus 1. First, at operation S131, the display apparatus 1 transmits information about the receivable channels in the current broadcasting area to the server 2. Next, at operation S132, the display apparatus 1 receives the program information of the channels corresponding to the receivable channels among the unified channels from the server 2. Next, at operation S133, the display apparatus 1 provides a user with the information of the channels corresponding to the receivable channels, among the unified channels.

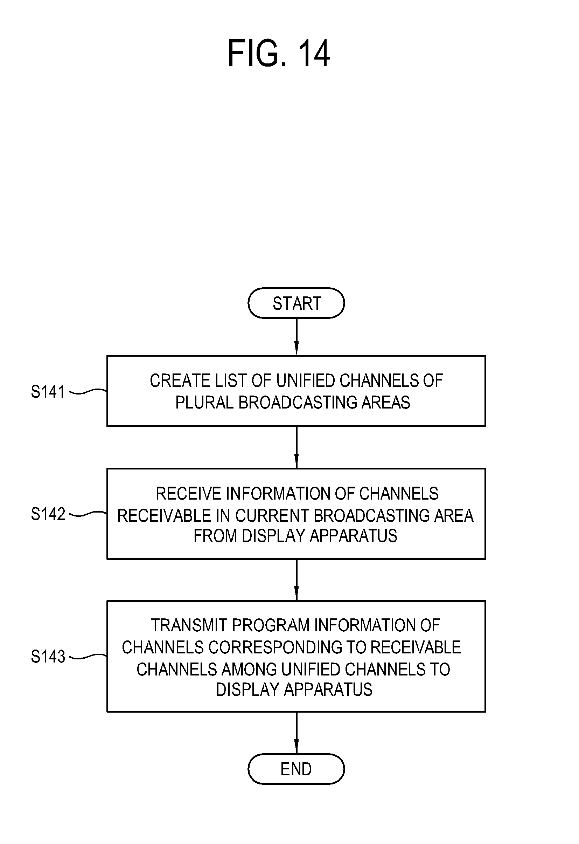

FIG. 14 is a flowchart showing operations of the server 2. First, at operation S141, the server 2 creates a list of unified channels of the plurality of broadcasting areas. Next, at operation S142, the server 2 receives information about the receivable channels in the current broadcasting area from the display apparatus 1. Next, at operation S143, the server 2 determines whether the unified channels correspond to the channels receivable by the display apparatus 1, and sends the display apparatus 1 the program information of the channels corresponding to the channels receivable by the display apparatus 1, among the unified channels.

As described above, according to an exemplary embodiment, program information of a receivable channel is provided, regardless of receiving locations. Thus, user convenience is improved.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (1) comprising:
a signal processor (12) configured to process a broadcasting signal of a predetermined channel;
a displayer (13) configured to display an image based on the processed broadcasting signal;
a communication section (14) configured to communicate with a server (2); and
a controller (17) configured to receive a list of unified channels of a plurality of broadcasting areas from the server, determine whether the unified channels correspond to receivable channels in a current broadcasting area, and provide program information of a plurality of channels corresponding to the receivable channels, among the unified channels.

2. The display apparatus according to claim 1, wherein the controller (17) is operable to use digital video broadcasting (DVB) triplet information to determine whether the unified channels correspond to the receivable channels.

3. The display apparatus according to claim 1 or 2, wherein the controller (17) is operable to use a major number, a minor number, and physical transmission channel (PTC) information in advanced television systems committee (ATSC) standard to determine whether the unified channels correspond to the receivable channels.

4. The display apparatus according to one of claims 1 to 3, wherein the controller is operable to receive the program information of the channels corresponding to the receivable channels, among the unified channels, from the server (2), and to provide the received program information.

5. A control method of a display apparatus displaying an image based on a broadcasting signal of a predetermined channel, the method comprising:
receiving (S31) a list of unified channels of a plurality of broadcasting areas from a server;
determining (S32) whether the unified channels correspond to receivable channels in a current broadcasting area; and
providing (S33) program information of a plurality of channels corresponding to the receivable channels, among the unified channels.

6. The method according to claim 5, wherein the determining comprises using digital video broadcasting (DVB) triplet information to determine whether the unified channels correspond to the receivable channels.

7. The method according to claim 5 or 6, wherein the determining comprises using a major number, a minor number, and physical transmission channel (PTC) information in advanced television systems committee (ATSC) standard to determine whether the unified channels correspond to the receivable channels.

8. The method according to one of claims 5 to 7, wherein the providing comprises receiving the program information of the channels corresponding to the receivable channels, among the unified channels, from the server, and providing the received program information.

9. A server (2) comprising:
a communication section (21) configured to communicate with a display apparatus (1);
a storage section (23) configured to store information about a channel of a broadcasting signal; and
a controller (22) configured to create a list (231) of unified channels of a plurality of broadcasting areas, and to transmit the created list of unified channels to the display apparatus.

10. The server according to claim 9, wherein the controller (22) is operable to create the list (231) of the unified channels as a union of a plurality of channels broadcasted in the plurality of broadcasting areas.

11. The server according to claim 9 or 10, wherein the list of the unified channels comprises digital video broadcasting (DVB) triplet information.

12. The server according to one of claims 9 to 11, wherein the list of the unified channels comprises a major number, a minor number, and physical transmission channel (PTC) information in advanced television systems committee (ATSC) standard.

13. The server according to one of claims 9 to 12, wherein the controller is operable to transmit program information of a plurality of channels, which correspond to receivable channels in a current broadcasting area of the display apparatus, among the unified channels, to the display apparatus.

14. A control method of a server providing information about a plurality of channels of a plurality of broadcasting signals, the method comprising:
creating (S51) a list of unified channels of a plurality of broadcasting areas; and
transmitting (S52) the created list of the unified channels to a display apparatus.

15. The method according to claim 14, wherein the creating comprises creating the list of the unified channels as a union of the plurality of channels broadcasted in the plurality of broadcasting areas.
